# EUROPÄISCHE PATENTANMELDUNG

(11) **EP 1 213 861 A2**
(43) Veröffentlichungstag der Anmeldung: **12.06.2002**
(21) Anmeldenummer: 01125641.9
(22) Anmeldetag: 26.10.2001
(51) Int. Cl.: H04J 3/08, H04L 12/413

(54) **Knoteneinrichtung für einen mehrere Einrichtungen verbindenden, seriellen Datenbus**

(30) Priorität: 07.12.2000 DE 10060938
(71) Anmelder: SIEMENS AKTIENGESELLSCHAFT, 80333 München (DE)
(72) Erfinder: Zwack, Eduard, 82178 Puchheim (DE)

(57) **Zusammenfassung**

Die Erfindung betrifft eine Knoteneinrichtung für einen mehrere Einrichtungen verbindenden, seriellen Datenbus (B), mit jeweils drei Eingangs- und Ausgangseinheiten (E1,E2,E3; A1,A2,A3), wobei eine zweite Ausgangseinheit (A2) der Knoteneinrichtung (K1) jeweils mit einer ersten Eingangseinheit (E1) einer zweiten Knoteneinrichtung (K2) des Datenbusses (B) verbindbar ist. Eine dritte Ausgangseinheit (A3) der Knoteneinrichtung (K1) ist mit einer Eingangseinheit (E) einer Einrichtung (EG) und eine dritte Eingangseinheit (E3) der Knoteneinrichtung (K1) ist mit einer Ausgangseinheit (A) der Einrichtung (EG) verbindbar. Die Knoteneinrichtung enthält einen Multiplexer (M) zur Durchschaltung der ersten (E1) oder dritten Eingangseinheit (E3) auf die zweite Ausgangseinheit (A2) der Knoteneinrichtung (K1), und weiterhin einen mit der ersten Eingangseinheit (E1), der dritten Eingangseinheit (E3) und dem Multiplexer (M) gekoppelten Detektor (D) zur Detektion eines eintreffenden Datenstromes an der ersten und/oder dritten Eingangseinheit (E1; E3) zur entsprechenden Steuerung der Durchschaltung des Multiplexers (M).

## Beschreibung

Angesichts einer wachsenden Anzahl von an lokalen Netzwerken angeschlossenen Einrichtungen und einer gleichzeitigen steigenden Datenübertragungsrate in derartigen lokalen Netzwerken wird einerseits ein erhöhtes Augenmerk auf eine kostenoptimale Leitungsführung und andererseits auf Einrichtungen zur Gewährleistung einer möglichst hohen Signalqualität gelegt.

Eine der verwendeten Ausgestaltungsformen lokaler Netze ist das sogenannte Ethernet. Das Ethernet basiert auf einem seriellen Datenbus mit einer Mehrzahl von an den Datenbus angeschlossenen Einrichtungen (z.B. Datenverarbeitungseinrichtungen oder Kommunikationsendgeräte), die gleichzeitig jeweils entweder Daten empfangen oder senden können, wobei eine Einrichtung vor einem Sendezugriff, d.h. dem Senden eines sogenannten Datenpakets, prüft, ob gerade Datenpakete über den Datenbus gesendet werden und, in Fällen, in denen dies zutrifft, der Sendezugriff durch die Einrichtung ausgesetzt wird. Durch bei längeren Datenbussen auftretenden Laufzeiteffekten kann der Fall eintreten, dass zwei Einrichtungen gleichzeitig Datenpakete über den Datenbus senden, wodurch es zu einer Kollision der den unterschiedlichen Sendeeinrichtungen zugeordneten Datenpakete kommt. Diese Kollision wird in der Regel von beiden sendenden Einrichtungen erkannt, die daraufhin den Sendezugriff unterbrechen und erst nach einem von den Einrichtungen zufällig ausgewählten Zeitraum erneut starten.

Durch verschiedene Arten von Kopplungselementen - im folgenden als Knoteneinrichtungen bezeichnet - wird ein lokales Netz, bzw. bei einer Ausgestaltung des lokalen Netzes als Ethernet, der Datenbus, in einzelne Segmente strukturiert.

Im einfachsten Fall ist eine Knoteneinrichtung als eine Station - in der Literatur häufig als Repeater bezeichnet - ausgebildet, die Datenpakete von einem ersten Segment des Datenbusses empfängt und diese auf ein zweites Segment des Datenbusses weiterleitet. Die Weiterleitung ist im allgemeinen mit einer Signalregenerierung, d.h. Verstärkung und Neuformung des Signals der empfangenen Datenpakete, verbunden. Des weiteren erfolgt zwischen den Anschlusseinheiten der Knoteneinrichtung eine elektrische Isolierung und ein Abschluss der Leitung, durch die eine Unterdrückung von Echoeffekten bewirkt wird.

Anders ausgestaltete Knoteneinrichtungen - in der Literatur häufig als Hubs bezeichnet - ermöglichen dagegen eine sternförmige Anbindung mehrerer Einrichtungen oder auch Segmente an einen Datenbus. Vergleichbar mit einem Repeater werden Datenpakete - im allgemeinen nach einer ebenfalls vergleichbaren Signalgenerierung - an alle Anschlüsse des Hubs identisch weitergegeben und die Anschlüsse voneinander elektrisch isoliert und abgeschlossen.

Bei der Planung eines lokalen Netzes sind mit steigender Datenübertragungsrate - und damit höherer Frequenz der Datensignale - regelmäßig aktive Knoteneinrichtungen vorzusehen, die eine Verschlechterung der Signalqualität durch eine Signalregenerierung und einen Abschluss der signalführenden Leitungen kompensieren.

Eine Anordnung, durch die die Signalqualität in einem lokalen netz erhalten werden kann, zeichnet sich beispielsweise durch eine Vielzahl von Hubs aus, die jeweils über einen kurzen Datenbus miteinander verbunden sind. Jeder Hub konzentriert dabei mehrere daran angeschlossene Einrichtungen auf einen Knoten des Datenbusses. Diese Netzwerkauslegung, die häufig für eine Verkabelung auf Etagenebene von Gebäuden gewählt wird, birgt einerseits den Vorteil von kleinen Segmentierungen eines lokalen Netzes und damit eine hohe Güte der Signalqualität, andererseits erweist sich die resultierende, sternförmige Topologie nachteilig für den Aufwand an Verkabelung des Netzwerkes.

Der vorliegenden Erfindung liegt die Aufgabe zugrunde, eine Knoteneinrichtung anzugeben, durch die ein Anschluss von Einrichtungen an einen Datenbus mit geringen Verkabelungsaufwand erreicht werden kann.

Diese Aufgabe wird erfindungsgemäß durch die kennzeichnenden Merkmale des Patentanspruchs 1 gelöst.

Erfindungsgemäß wird ein zweites Ausgangs-/Eingangseinheitenpaar der Knoteneinrichtung mit einem ersten Ausgangs-/Eingangseinheitenpaar einer weiteren Knoteneinrichtung in Serie geschaltet und bildet somit einen seriellen Datenbus. An einem dritten Ausgangs-/Eingangseinheitenpaar der Knoteneinrichtung wird eine Einrichtung, z.B. eine Datenverarbeitungseinrichtung oder ein Kommunikationsendgerät, angeschlossen. Führt diese Einrichtung keinen Sendezugriff auf den Datenbus aus, wird ein Ausgang der Einrichtung durch einen in der Knoteneinrichtung angeordneten Multiplexer vom Datenbus getrennt. Wird dagegen von der Einrichtung ein Sendezugriff gestartet, wird die Übermittlung der von der Einrichtung gesendeten Datenpakete durch einen in der Knoteneinrichtung angeordneten Detektor erkannt, der eine Umschaltung des Multiplexers auf den dem Ausgang der Einrichtung zugeordneten Eingang der Knoteneinrichtung veranlasst. Das Datenpaket wird somit auf den zweiten Ausgang der Knoteneinrichtung geleitet.

Die Verbindung der Einrichtung mit dem Datenbus wird nur in den Fällen von der Knoteneinrichtung durchgeschaltet, in denen die Einrichtung einen Sendezugriff auf den Datenbus durchführt. Somit wird die Gesamtlänge des Datenbusses so kurz wie möglich gehalten. Die kürzere Buslänge bei Sendepausen der Einrichtung hat den Vorteil, dass eine bessere Signalqualität der Datenpakete am Datenbus gewährleistet werden kann, da mit zunehmender Länge eines Datenbusses auch die Signalbeeinträchtigungen durch Reflexionen und Dämpfung steigen.

Vorteilhafte Weiterbildungen der Erfindung sind in den Unteransprüchen angegeben.

Eine vorteilhafte Weiterbildung der Erfindung sieht vor, dass mehrere Knoteneinrichtungen in einer Kettenstruktur am Datenbus angeordnet werden, um somit weitere Einrichtungen über jeweils eine Knoteneinrichtung an den Datenbus anzubinden. Eine weitere Ausgestaltung der Erfindung sieht die Rückführung der zweiten Ausgangseinheit auf die Knoteneinrichtung vor, die das letzte Glied der Kettenstruktur bildet. Durch diese Weiterbildung wird eine Ringtopologie des Datenbusses erreicht, die eine vorteilhafte Verteilung der Datenpakete auf dem Datenbus bewirkt.

Durch eine Ausgestaltung der Eingangs- und Ausgangseinheiten mit signalregenerierenden Verstärkern und der Eingangseinheiten mit Leitungsabschlüssen wird eine hohe Signalqualität für die über den Datenbus übertragenen Datenpakete erreicht.

Gemäß einer weiteren Ausgestaltung der Erfindung erfolgt die Versorgung der Knoteneinrichtungen mit elektrischer Energie über den Datenbus. Auf diese Weise ergibt sich eine Einsparung an zusätzlichen Stromversorgungsleitungen für die Knoteneinrichtungen. Überdies können ebenfalls die an Knoteneinrichtungen angeschlossene Einrichtungen mit elektrischer Energie über den Datenbus versorgt werden.

Ein Ausführungsbeispiel der Erfindung wird im Folgenden anhand der Zeichnung näher erläutert.

Dabei zeigen
- Fig. 1:: ein Strukturbild zur schematischen Darstellung der wesentlichen Funktionseinheiten eines Datenbusses;
- Fig. 2:: ein Strukturbild zur schematischen Darstellung einer Knoteneinrichtung des Datenbusses;
- Fig. 3A:: ein Strukturbild zur schematischen Darstellung einer Eingangseinheit der Knoteneinrichtung; und
- Fig. 3B:: ein Strukturbild zur schematischen Darstellung einer Ausgangseinheit der Knoteneinrichtung.

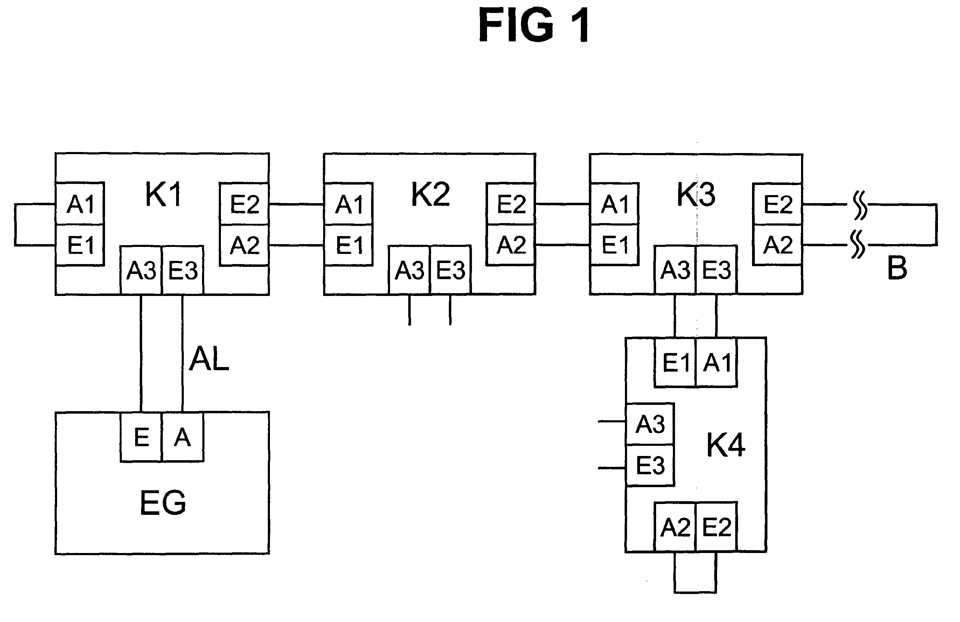

Fig. 1 zeigt einen Datenbus B, der eine Mehrzahl von Knoteneinrichtungen K1,K2,K3 kettenförmig verbindet. Die Knoteneinrichtungen K1,K2,K3 weisen jeweils drei Eingangseinheiten E1,E2,E3 sowie drei Ausgangseinheiten A1,A2,A3 auf. Dabei ist ein erstes Ausgangs-/Eingangseinheitenpaar A1,E1 einer Knoteneinrichtung K2 mit einem zweiten Eingans-/Ausgangseinheitenpaar E2,A2 der in der Kettenstruktur vorausgehenden Knoteneinrichtung K1 und das zweite Ausgangs-/Eingangseinheitenpaar A2,E2 der Knoteneinrichtung K2 mit einem ersten Eingans-/Ausgangseinheitenpaar E1,A1 einer in der Kettenstruktur nachfolgenden Knoteneinrichtung K3 verbunden. Bei der den Anfang der Kettenstruktur bildenden Knoteneinrichtung K1 ist die erste Eingangseinheit E1 der Knoteneinrichtung K1 mit der ersten Ausgangseinheit A1 der Knoteneinrichtung K1 verbunden so dass der Datenbus B in einer ringförmigen Struktur geschlossen ist. In ähnlicher Weise wird am anderen Ende der Kettenstruktur, bei der dritten bzw. vierten Knoteneinrichtung K3,K4, verfahren, indem die jeweils zweite Eingangseinheit E2 mit der jeweils zweiten Ausgangseinheit A2 der jeweiligen Knoteneinrichtung K3,K4 verbunden wird. In Fig. 1 ist durch gewellte Linien angedeutet, dass nach der Knoteneinrichtung K3 als dargestellten Endpunkt der Kettenstruktur weitere Knoteneinrichtungen angeordnet sein können.

An die Knoteneinrichtungen K1,K2,K3 können jeweils über ihr drittes Eingangs-/Ausgangseinheitenpaar E3,A3 - wie in Fig. 1 für die Knoteneinrichtung K1 dargestellt - eine Einrichtung EG (z.B. Datenverarbeitungseinrichtungen oder Kommunikationsendgeräte) angeschlossen werden, wobei die Ausgangseinheit A der Einrichtung mit der Eingangseinheit E3 der Knoteneinrichtung und die Eingangseinheit E der Einrichtung mit der Ausgangseinheit A3 der Knoteneinrichtung verbunden wird. Alternativ kann an jeder der die Kettenstruktur des Datenbusses B bildenden Knoteneinrichtungen K1,K2,K3 auch - wie in Fig. 1 für die Knoteneinrichtung K3 dargestellt - eine weitere Knoteneinrichtung K4 angeschlossen werden, um beispielsweise Verzweigung des Datenbusses B zu erreichen.

Die Knoteneinrichtungen K1,...,K4 sind jeweils als Ethernetanschlussdose ausgeführt, an die über eine genormte Steckverbindung eine Anschlussleitung AL eine Verbindung der dritten Ausgangs- bzw. Eingangseinheit A3,E3 zu der Eingangs- bzw. Ausgangseinheit E,A der Einrichtung EG hergestellt werden kann.

Die Architektur des Datenbusses B lehnt sich im vorliegenden Ausführungsbeispiel an die Spezifikationen des Ethernets an. Als Übertragungsmedium wird eine vieradrige, verdrillte Leitung mit einem symmetrischen Übertragungsverfahren verwendet, d.h. von diesen vier Adern der Leitung sind zwei Adern - eine Signalader und eine zugehörige Masseader - für die Senderichtung und entsprechend zwei Adern für die Empfangsrichtung reserviert. In Fig. 1 ist, zugunsten einer übersichtlicheren Darstellung des Datenbusses B und der Anschlussleitung AL, nur die jeweilige Signalader unter Ausblendung ihrer zugehörigen Masseader dargestellt.

Die Einganseinheiten E1,E2,E3 sowie die Ausgangseinheiten A1,A2,A3 der Knoteneinrichtungen K1,...,K4 weisen jeweils signalregenerierende Einrichtungen, z.B. Verstärker, auf. Gegenüber der bereits oben erwähnten Verkabelung unter Verwendung eines ebenfalls mit signalregenerierenden Funktionen ausgestatteten Hubs ist die Verkabelung zwischen kettenförmig angeordneten Knoteneinrichtungen einfacher zu gestalten als mit einer sternförmigen Topologie, die sich durch die Verwendung eines Hubs ergibt.

Im Folgenden wird weiter auf die Funktionseinheiten der Fig. 1 Bezug genommen.

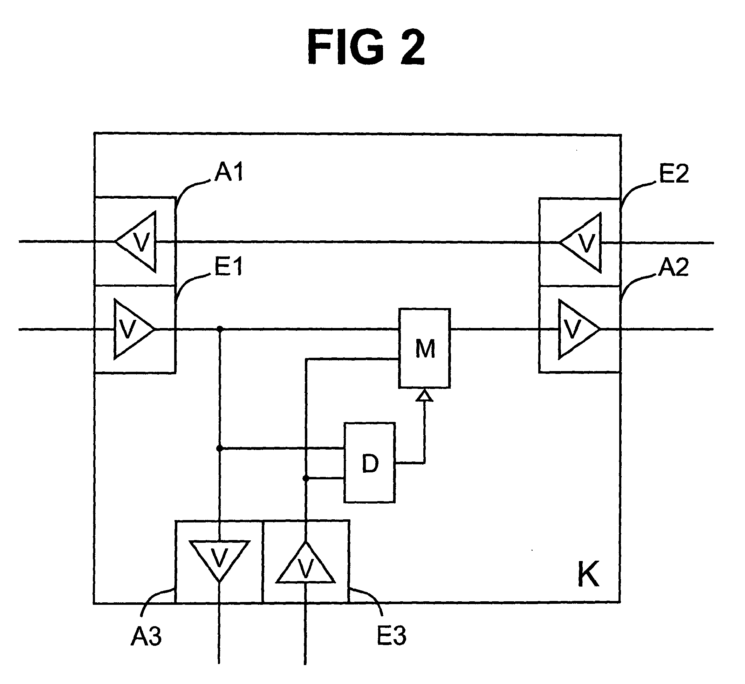

Fig. 2 zeigt schematisch den Aufbau einer Knoteneinrichtung K. Jeder der Ausgangs- bzw. Eingangseinheiten A1,A2,A3; E1,E2,E3 der Knoteneinrichtung K enthält, neben anderen - in Fig. 2 nicht dargestellten - Komponenten, einen Verstärker V, der hier zur leichteren Bestimmung der Richtung der an der Knoteneinrichtung K eintreffenden bzw. die Knoteneinrichtung K verlassenden Datenpakete dargestellt ist. Analog zur Darstellung in Fig. 1 ist auch in Fig. 2 nur die jeweilige Signalader ohne deren zugehörige Masseader dargestellt.

Die zweite Eingangseinheit E2 der Knoteneinrichtung K ist direkt mit der ersten Ausgangseinheit A1 verbunden. Die Eingangseinheit E1 der Knoteneinrichtung K ist direkt mit der Ausgangseinheit A3 sowie mit einem Eingang eines Multiplexers M verdrahtet. Ein weiterer Eingang des Multiplexers M ist mit der Eingangseinheit E3 verdrahtet. Der Ausgang des Multiplexers M ist direkt mit der zweiten Ausgangseinheit A2 der Knoteneinrichtung K verbunden. Die zwei Eingänge eines Detektors D der Knoteneinrichtung K sind mit der ersten Eingangseinheit E1 bzw. der dritten Eingangseinheit E3 verbunden. Der Ausgang des Detektors D ist mit einem Steuerungseingang des Multiplexers M verbunden. Der Multiplexer M stellt, abhängig vom Ausgangssignal eines Detektors D, entweder die an der ersten Eingangseinrichtung E1 oder die an der dritten Einganseinrichtung E3 empfangenen Datenpakete an die mit dem Ausgang des Multiplexers M verdrahteten zweiten Ausgangseinrichtung A2 durch.

Der Detektor D detektiert ein Eintreffen von Datenpaketen an der ersten und/oder dritten Eingangseinheit E1,E3 und steuert den Multiplexer M, der eine Durchschaltung derjenigen Eingangseinheit E1,E3 auf die Ausgangseinheit A2 ausführt, an dem vom Detektor ein Eintreffen von Datenpaketen bestimmt wird.

Falls weder an der ersten noch an der dritten Eingangseinheit E1,E3 ein Datenstrom anliegt, ist durch den Multiplexer M die erste Eingangseinheit E1 auf die zweite Ausgangseinheit A2 durchgeschaltet. Wird nun an der dritten Eingangseinheit E3 vom Detektor D ein Signal durch eintreffende Datenpaketen erkannt, steuert dieser den Multiplexer M an, der eine Durchschaltung der dritten Eingangseinheit E3 auf die zweite Ausgangseinheit A2 veranlasst. Wird der Sendezugriff durch die Einrichtung EG beendet, ist im Detektor D eine Totzeit von beispielsweise 2µs vorgesehen, bevor dieser den Multiplexer M auf eine Umschaltung auf die erste Eingangseinheit E1 veranlasst, da der Detektor einen Ruhezustand - d.h. die Einrichtung EG (nicht dargestellt) führt keinen Sendezugriff aus - nicht von einem Senden einer aus mehreren logischen Nullen bestehenden Datensequenz unterscheiden kann.

Trifft während einer Durchschaltung des Multiplexers M von einer der Eingangseinheiten E1,E3 auf die zweite Ausgangseinheit A2 ein Datenpaket an der jeweils anderen Eingangseinheit E3, E1 ein, wird durch den Detektor D eine Steuerung des Multiplexers M zur Umschaltung auf die jeweils andere Eingangseinheit E3,E1 ausgesetzt, bis vom Detektor D eine Beendigung des Datenverkehrs an der ursprünglich durchgeschalteten Eingangseinheit E1,E3 erkannt wird. Ist beispielsweise - infolge einer Detektion von eintreffenden Datenpaketen an der ersten Eingangseinheit E1, nicht jedoch an der dritten Eingangseinheit E3 - die erste Eingangseinheit E1 durch den Multiplexer M auf die zweite Ausgangseinheit A2 durchgeschaltet, steuert der Detektor D, im Falle eintreffender Datenpakete an der dritten Eingangseinheit E3, den Multiplexer M nicht sofort auf eine Durchschaltung dieser dritten Eingangseinheit E3 auf die zweite Ausgangseinheit A2 an, sondern erst wenn vom Detektor D eine Beendigung des Eintreffens von Datenpaketen an der Eingangseinheit E1 detektiert wird.

Die für die Detektion der eintreffenden Datenpakete durch den Detektor D sowie die für die Umschaltung des Multiplexers M benötigten Zeitspanne kann vorübergehend zu einem vollkommenen oder teilweisen Verlust der Datenpakete an der zweiten Ausgangseinheit A2 führen. Ebenso erfolgt ein vorübergehender Datenverlust, wenn an beiden Eingangseinheiten E1,E3 gleichzeitig Datenpakete eintreffen, da der Multiplexer M nur jeweils eine der beiden Eingangseinheiten E1,E3 auf die zweite Ausgangseinheit A2 durchschalten kann. In beiden Fällen ist jedoch durch das Ethernetprotokoll gewährleistet, dass insgesamt der vollständige Datensatz an der als Empfänger dieser Datenpakete deklarierten Einrichtung eintrifft. Das Ethernetprotokoll sieht nämlich vor, dass eine sendende Einrichtung gleichzeitig die am Datenbus übertragenen Datenpakete mit den gesendeten vergleicht und so erkennen kann, ob eine korrekte Übertragung, ein Übertragungsfehler oder eine Kollision während des Sendezugriffs aufgetreten ist. Im Falle eines Übertragungsfehlers - in diesem Fall ein teilweiser oder vollkommener Verlust einzelner Datenpakete - ist durch das Ethernetprotokoll zu einem späteren Zeitpunkt ein erneuter Sendeversuch durch die sendende Einrichtung vorgesehen.

Führt die Einrichtungen EG keinen Sendezugriff auf den Datenbus B aus, ist sie, zusammen mit ihrer Anschlussleitung AL durch den Multiplexer M vom Datenbus B galvanisch getrennt. Dadurch verringert sich die Länge des Datenbusses B in Zeiten, in denen die Einrichtung EG keinen Sendezugriff ausführt. Die galvanische Entkopplung der dritten Eingangseinheit E3 von der ersten Eingangseinheit E1 durch den Multiplexer M gewährleistet weiterhin, dass ein Zustecken einer Einrichtung EG einen über den Datenbus B gesendeten Datenstrom, der von der ersten Eingangseinheit E1 über den Multiplexer M zur zweiten Ausgangseinheit A2 geleitet wird, nicht unterbricht.

Die Stromversorgung des Detektor D, der Multiplexer M sowie die Eingangs- und Ausgangseinheiten E1,E2,E3; A1,A2,A3 kann über den Datenbus B erfolgen oder alternativ, wie im Ausführungsbeispiel, über ein externes Netzteil (nicht dargestellt) und über entsprechende Stromversorgungsleitungen (nicht dargestellt).

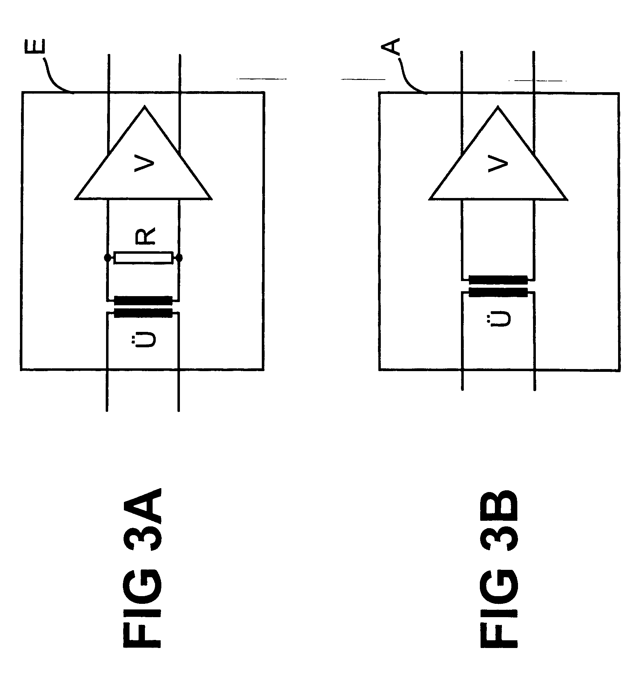

Fig. 3A zeigt eine Eingangseinheit E einer Knoteneinrichtung K, bestehend aus einem Übertrager Ü für eine galvanische Entkopplung des Datensignals vom Datenbus B, einem Widerstand R, der als Leitungsabschluss dient, und einem Verstärker V. Bei entsprechender Wahl der Komponenten der Eingangseinheit E, insbesondere der Bandbreite des Verstärkers V, ist ein Übertragungsverfahren über den Datenbus B im Frequenzbereich von 1-1000 MHz erreichbar.

Fig. 3B zeigt eine Ausgangseinheit A einer Knoteneinrichtung K, bestehend aus einem Übertrager Ü und einem Verstärker V.

## Patentansprüche

1. Knoteneinrichtung für einen mehrere Einrichtungen verbindenden, seriellen Datenbus (B),
- mit jeweils drei Eingangs- und Ausgangseinheiten (E1,E2,E3; A1,A2,A3), wobei eine zweite Ausgangseinheit (A2) der Knoteneinrichtung (K1) jeweils mit einer ersten Eingangseinheit (E1) einer zweiten Knoteneinrichtung (K2) des Datenbusses (B) verbindbar ist, und wobei eine dritte Ausgangseinheit (A3) der Knoteneinrichtung (K1) mit einer Eingangseinheit (E) einer Einrichtung (EG) und eine dritte Eingangseinheit (E3) der Knoteneinrichtung (K1) mit einer Ausgangseinheit (A) der Einrichtung (EG) verbindbar ist,
- mit einem Multiplexer (M) zur Durchschaltung der ersten (E1) oder dritten Eingangseinheit (E3) auf die zweite Ausgangseinheit (A2) der Knoteneinrichtung (K1), und,
- mit einem mit der ersten Eingangseinheit (E1), der dritten Eingangseinheit (E3) und dem Multiplexer (M) gekoppelten Detektor (D) zur Detektion eines eintreffenden Datenstromes an der ersten und/oder dritten Eingangseinheit (E1; E3) zur entsprechenden Steuerung der Durchschaltung des Multiplexers (M).

2. Knoteneinrichtung nach Anspruch 1,
**dadurch gekennzeichnet,**
**dass** mehrere Knoteneinrichtungen (K1,...,K3) in einer Kettenstruktur am Datenbus (B) angeordnet sind,

3. Knoteneinrichtung nach Anspruch 2,
**dadurch gekennzeichnet,**
**dass** bei einer das letzte Glied der Kettenstruktur bildenden Knoteneinrichtung (K3) die zweite Ausgangseinheit (A2) auf die Knoteneinrichtung (K3) zurückgeführt wird.

4. Knoteneinrichtung nach einem der vorhergehenden Ansprüche,
**dadurch gekennzeichnet,**
**dass** die Eingangseinheiten (E1,E2,E3) bzw. Ausgangseinheiten (A1,A2,A3) der Knoteneinrichtungen (K1,...,K4) signalregenerierende Verstärker (V) aufweisen.

5. Knoteneinrichtung nach Anspruch 4,
**dadurch gekennzeichnet,**
**dass** die signalregenerierenden Verstärker (V) der Eingangseinheiten (E1,E2,E3) jeweils eine Eingangstufe mit Leitungsabschluss aufweisen.

6. Knoteneinrichtung nach einem der vorhergehenden Ansprüche,
**dadurch gekennzeichnet,**
**dass** die Versorgung von Einrichtungen (EG) und Knoteneinrichtungen (K) mit elektrischer Energie über den Datenbus (B) erfolgt.

7. Knoteneinrichtung nach einem der vorhergehenden Ansprüche,
**dadurch gekennzeichnet,**
**dass** der Datenbus (B) gemäß dem Ethernetstandard ausgestaltet ist.

8. Knoteneinrichtung nach einem der vorhergehenden Ansprüche,
**dadurch gekennzeichnet,**
**dass** anstelle einer Einrichtung (EG) an der dritten Ausgangseinheit (A3) der Knoteneinrichtung (K3) eine erste Eingangseinheit (E1) einer dritten Knoteneinrichtung (K4), bzw. dass an der dritten Eingangseinheit (A3) der Knoteneinrichtung (K3) eine erste Ausgangseinheit (A1) der dritten Knoteneinrichtung (K4) angeschlossen ist.

9. Knoteneinrichtung einem der Ansprüche 1 bis 7,
**dadurch gekennzeichnet,**
**dass** die Einrichtung (EG) eine Datenverarbeitungseinrichtung ist.

10. Knoteneinrichtung einem der vorhergehenden Ansprüche,
**dadurch gekennzeichnet,**
**dass** die Knoteneinrichtung (K1) als Anschlussdose zum Anschluss einer Anschlussleitung (AL) an die dritte Ausgangsbzw. Eingangeinheit (A3;E3) ausgestaltet ist.
